(19) Europäisches Patentamt
European Patent Office
Office européen des brevets

(11) EP 4 079 779 A1

(12) EUROPEAN PATENT APPLICATION

(43) Date of publication:
**26.10.2022 Bulletin 2022/43**

(21) Application number: **22168983.9**

(22) Date of filing: **20.04.2022**

(51) International Patent Classification (IPC):
***C08G 18/12*** *(2006.01)* ***C08G 18/30*** *(2006.01)*
***C08G 18/40*** *(2006.01)* ***C08G 18/44*** *(2006.01)*
***C08G 18/48*** *(2006.01)* ***C08G 18/76*** *(2006.01)*
***C09D 175/06*** *(2006.01)* ***C09D 175/08*** *(2006.01)*
***D06N 3/14*** *(2006.01)* ***C08G 18/32*** *(2006.01)*

(52) Cooperative Patent Classification (CPC):
(C-Sets available)
**C08G 18/12; C08G 18/307; C08G 18/3206; C08G 18/4018; C08G 18/44; C08G 18/4854; C08G 18/7671; C09D 175/06; C09D 175/08; D06N 3/14** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.04.2021 JP 2021072118**

(71) Applicant: **Asahi Kasei Kabushiki Kaisha**
**Tokyo 1000006 (JP)**

(72) Inventors:
- **Kawai, Yasufumi**
  **Tokyo, 1000006 (JP)**
- **Senda, Kosuke**
  **Tokyo, 1000006 (JP)**
- **Hoshino, Eriko**
  **Tokyo, 1000006 (JP)**
- **Ueno, Eizaburou**
  **Tokyo, 1000006 (JP)**

(74) Representative: **Strehl Schübel-Hopf & Partner**
**Maximilianstrasse 54**
**80538 München (DE)**

# (54) POLYOL COMPOSITION

(57) An object of the present invention is to provide, for example, a polyol composition that can be used as a starting material in producing synthetic leather without a solvent, and a method for producing synthetic leather without a solvent. Another object of the present invention is to provide, for example, a polyol composition that produces a polyurethane film excellent in flexibility, chemical resistance, and moist heat resistance and serves as a starting material in producing synthetic leather without a solvent. The present invention provides a polyol composition for a starting material for synthetic leather production without a solvent, the polyol composition having a carbonate skeleton, having a viscosity of 100 to 1250 mPa·s measured at 50°C by a method of JIS K 1557-5 (2007), and having a hydroxyl value of 40 to 75 mgKOH/g measured by a method of JIS K 1557-1 (2007).

EP 4 079 779 A1

(52) Cooperative Patent Classification (CPC): (Cont.)

C-Sets
**C08G 18/12, C08G 18/307;**
**C08G 18/12, C08G 18/3206**

## Description

### Technical Field

The present invention relates to a polyol composition.

### Background Art

Synthetic leather produced with urethane resin as a starting material is widely used in the production of vehicle interior materials, furniture, moisture-permeable waterproof clothing, and the like. Among others, urethane resin obtained using polycarbonate diol is known as a material excellent in hydrolysis resistance, chemical resistance, oxidative degradation resistance, heat resistance, and the like. A solution of polyurethane in N,N-dimethylformamide (hereinafter, abbreviated to "DMF") is generally used as urethane resin. However, use of DMF is more strictly regulated in Europe and China. There is urgent need for reduction in use thereof or shift to solventless approaches.

A skin material-forming composition for a fiber laminate, comprising a base being polycarbonate diol obtained from 1,6-hexanediol and low-molecular carbonate, and a curing agent containing a modified polyisocyanate of hexamethylene diisocyanate and an isocyanurate-modified polyisocyanate, wherein both the base and the curing agent are free of an organic solvent is known as a method for solving the problem (see e.g., International Publication No. WO 2009-098841). A method for producing synthetic leather having a cured layer of a moisture-curable urethane hot-melt resin composition is known as a solventless method (see e.g., Japanese Patent No. 6485726). A polyurethane dispersion comprising a polyurethane prepolymer comprising aromatic diisocyanate and polyether polyol, and an anionic surfactant is known for ultrafine fiber nonwoven fabric synthetic leather purposes (see e.g., Japanese Translation of PCT International Application Publication No. 2019-529614).

### Summary of Invention

### Problems to be Solved by Invention

However, the polycarbonate diol obtained from 1,6-hexanediol and low-molecular carbonate for use in International Publication No. WO 2009-098841 has high viscosity. Therefore, a liquid of the base blended with the curing agent might be unable to be applied to a release support due to its high viscosity, and even if the liquid can be applied, the obtained coating film presents problems associated with surface smoothness. A problem of the method described in Japanese Patent No. 6485726 is that in the case of applying the resin composition to a base material, the obtained coating film does not have a uniform thickness due to high viscosity of urethane resin. The synthetic leather obtained by the method described in Japanese Translation of PCT International Application Publication No. 2019-529614 has problems associated with chemical resistance or abrasion resistance.

Accordingly, an object of the present invention is to provide, for example, a polyol composition that can be used as a starting material in producing synthetic leather without a solvent, and a method for producing synthetic leather without a solvent. Another object of the present invention is to provide, for example, a polyol composition that produces a polyurethane film excellent in flexibility, chemical resistance, and moist heat resistance and serves as a starting material in producing synthetic leather without a solvent.

### Means for Solving Problems

The present inventors have conducted diligent studies to attain the objects and consequently completed the present invention by finding that the objects can be attained by a polyol composition that satisfies predetermined characteristics.

Specifically, the present invention is as follows.

[1] A polyol composition for a starting material for synthetic leather production without a solvent, the polyol composition having a carbonate skeleton, having a viscosity of 100 to 1250 mPa·s measured at 50°C by a method of JIS K 1557-5 (2007), and
having a hydroxyl value of 40 to 75 mgKOH/g measured by a method of JIS K 1557-1 (2007).

[2] The polyol composition according to [1], wherein the polyol composition has an ester skeleton and/or an ether skeleton, and has a content of the carbonate skeleton is 1 to 99% by mol.

[3] The polyol composition according to [1], wherein the polyol composition has an ester skeleton and/or an ether skeleton, and has a content of the carbonate skeleton is 1 to 30% by mol.

[4] The polyol composition according to any of [1] to [3], wherein the polyol composition has a glass transition

temperature of -60°C or lower measured with a differential scanning calorimeter, and has an acid value of 2.5 mgKOH/g or less determined by a method described in JIS K 0070 (1992).

[5] A urethane prepolymer for synthetic leather production without a solvent, the urethane prepolymer being obtainable using the polyol composition according to any of [1] to [4] and a polyisocyanate.

[6] A method for producing synthetic leather, comprising the step of applying a urethane prepolymer composition comprising the urethane prepolymer according to [5] onto a base fabric or a release support without a solvent, followed by moisture curing.

[7] A method for producing synthetic leather, comprising the step of applying a mixed solution obtained by mixing a urethane prepolymer composition comprising the urethane prepolymer according to [5] with a cross-linking agent onto a base fabric or a release support without a solvent, followed by reaction.

Advantages of Invention

The polyol composition of the present invention can be used as, for example, a starting material in producing synthetic leather without a solvent. Also, the polyol composition of the present invention can produce, for example, a polyurethane film excellent in flexibility, chemical resistance, and moist heat resistance and can be used as a starting material in producing synthetic leather without a solvent.

Mode for Carrying Out Invention

Hereinafter, the mode for carrying out the present invention (hereinafter, referred to as the "present embodiment") will be described in detail. However, the present invention is not limited by the following embodiments and can be carried out by making various changes or modifications without departing from the spirit of the present invention.

[Polyol composition]

The polyol composition of the present embodiment is a polyol composition that is used as a starting material in producing synthetic leather without a solvent (hereinafter, also referred to as a "polyol composition for a starting material for synthetic leather production without a solvent") and has a carbonate skeleton, has a viscosity of 100 to 1250 mPa·s measured at 50°C by a method of JIS K 1557-5 (2007), and has a hydroxyl value of 40 to 75 mgKOH/g measured by a method of JIS K 1557-1 (2007). The polyol composition of the present invention can produce, for example, a polyurethane film excellent in flexibility, chemical resistance, and moist heat resistance.

The polyol composition of the present embodiment preferably comprises polyol having a carbonate skeleton represented by the following formula (A) (hereinafter, also simply referred to as a "carbonate skeleton") and a terminal hydroxyl group.

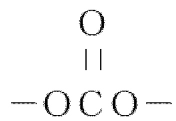

(A)

The polyol composition of the present embodiment can further have an ester skeleton and/or an ether skeleton in addition to the carbonate skeleton. In this case, the content of the carbonate skeleton evaluated by a method described in Examples mentioned later is preferably 1 to 99% by mol. When the content of the carbonate skeleton is 1% by mol or more, the resulting synthetic leather or artificial leather can be expected to have chemical resistance and hydrolysis resistance. On the other hand, when the content of the carbonate skeleton is 99% by mol or less, the viscosity of the polyol composition at 50°C can be set to the range mentioned above by optimizing the composition of the polyol composition. The content of the carbonate skeleton is more preferably 5% by mol or more and is further preferably 10% by mol or more because chemical resistance and hydrolysis resistance that permit use for purposes, such as vehicle installation, which require high durability can be obtained. The content of the carbonate skeleton is more preferably 90% by mol or less, further preferably 80% by mol or less, still further preferably 70% by mol or less, particularly preferably 60% by mol or less, exceedingly preferably 30% by mol or less.

The polyol composition of the present embodiment has a viscosity of 100 to 1250 mPa·s measured at 50°C by a method of JIS K 1557-5 (2007). When the viscosity of the polyol composition is 100 mPa·s or higher, the resulting polyurethane resin composition can obtain a necessary thickness when applied to a base fabric or a release paper. On the other hand, when the viscosity of the polyol composition is 1250 mPa·s or lower, a polyurethane composition obtainable from the polyol composition can be applied to a base fabric or a release support without the use of a solvent. The viscosity of the polyol composition is further preferably 100 to 1200 mPa·s. When the viscosity of the polyol composition is 100

to 1000 mPa·s, a polyurethane composition obtainable from the polyol composition tends to be able to produce synthetic leather having a thickness of interest without the use of a solvent, regardless of the molecular weight of polyurethane.

Examples of the method for controlling the viscosity of the polyol composition within the range described above include, but are not particularly limited to, a method of selecting diol for use as a starting material in polycarbonate diol production. Usually, diol having a longer main chain or diol having a side chain tends to reduce the viscosity of the resulting polycarbonate diol. Other examples thereof include a method of selecting the structure or amount of an ester compound and/or an ether compound to be combined therewith.

In the present embodiment, the viscosity of the polyol composition can be measured by a method described in Examples mentioned later.

The polyol composition of the present embodiment preferably has a hydroxyl value of 40 to 75 mgKOH/g measured by a method described in JIS K 1557-1 (2007). When the polyol composition of the present embodiment has a hydroxyl value of 40 mgKOH/g or more, a polyurethane composition obtainable from the polyol composition tends to be able to be applied to a base fabric or a release support without the use of a solvent. When the polyol composition of the present embodiment has a hydroxyl value of 75 mgKOH/g or less, flexible synthetic leather or artificial leather tends to be able to be obtained. The hydroxyl value of the polyol composition of the present embodiment is more preferably 45 to 70 mgKOH/g, further preferably 45 to 65 mgKOH/g.

Examples of the method for controlling the hydroxyl value of the polyol composition within the range described above include, but are not particularly limited to, a method of mixing polycarbonate diol with an ether compound and/or an ester compound, the method involving mixing the polycarbonate diol with the ether compound and/or the ester compound such that their mass-average hydroxyl value falls within the range described above. In the case of using an ether compound and/or an ester compound as a starting material in polymerization to obtain polycarbonate diol, examples thereof include a method of performing the polymerization until the hydroxyl value falls within the range described above.

In the present embodiment, the hydroxyl value of the polyol composition can be measured by a method described in Examples mentioned later.

It is generally known that a larger hydroxyl value of a polyol composition reduces the viscosity of the polyol composition and synthetic leather produced using such a polyol composition has reduced flexibility. The polyol composition of the present embodiment which has low viscosity without increase in hydroxyl value can attain a decreased amount of a solvent and further a solventless approach in producing synthetic leather and can also produce synthetic leather having flexibility.

Synthetic leather that is used for vehicle installation purposes, etc. is required to be free of reduction in flexibility even at low temperatures equal to or lower than -20°C. For obtaining such synthetic leather, it is preferred that a polyol composition serving as a starting material should have a low glass transition temperature (hereinafter, also referred to as "Tg"). The polyol composition of the present embodiment preferably has Tg of -50°C or lower measured with a differential scanning calorimeter. When the Tg is -50°C or lower, synthetic leather obtainable using the polyol composition tends to have less reduction in flexibility even at low temperatures equal to or lower than -20°C. The Tg of the polyol composition of the present embodiment is further preferably -55°C or lower. The Tg is further preferably -60°C or lower because change in flexibility at low temperatures is reduced, regardless of the composition of polyurethane. The lower limit of the Tg of the polyol composition of the present embodiment is not particularly limited and is, for example, -90°C.

Examples of the method for controlling the Tg of the polyol composition within the range described above include, but are not particularly limited to, a method of selecting diol for use as a starting material in polycarbonate diol production, and a method of controlling the structure or amount of an ester compound and/or an ether compound to be combined with polycarbonate diol.

In the present embodiment, the Tg of the polyol composition is evaluated by a method described in Examples mentioned later.

Usually, the Tg of polyurethane obtainable from a polyol composition is higher than that of the polyol composition (hereinafter, the difference between the Tg of polyurethane and the Tg of the polyol composition is also referred to as $\Delta$Tg). Although $\Delta$Tg differs depending on the type of the polyol composition, the composition of urethane, etc., smaller $\Delta$Tg tends to reduce change in flexibility of synthetic leather between ordinary temperature and low temperatures. The polyol composition of the present embodiment preferably has $\Delta$Tg of 50°C or less, further preferably 45°C or less, evaluated by a method described in Examples mentioned later using MDI as isocyanate and 1,4-butanediol as a chain extender. The lower limit of the $\Delta$Tg is not particularly limited and is, for example, 1°C.

Examples of the method for controlling the $\Delta$Tg within the range described above include, but are not particularly limited to, a method of controlling the structure or amount of an ester compound and/or an ether compound to be combined with polycarbonate diol.

The polyol composition of the present embodiment preferably has fluidity at room temperature (20 $\pm$ 5°C). The phrase "have fluidity at room temperature" described herein means that a flow time evaluated by a method described in Examples mentioned later is within 90 seconds. The flow time is preferably within 70 seconds, more preferably within 50 seconds. The polyol composition of the present embodiment having a flow time within 90 seconds does not have to

be dissolved by heating and is thus easy to handle. This is also preferred because the resulting polyurethane tends to have high flexibility.

The polyol composition of the present embodiment may or may not have turbidity as long as the polyol composition has fluidity at room temperature.

The polyol composition of the present embodiment preferably has an acid value of 2.5 mgKOH/g or less. The polyol composition of the present embodiment having an acid value of 2.5 mgKOH/g or less tends to be less likely to inhibit the action of a catalyst for use in urethane reaction. The acid value is further preferably 1.5 mgKOH/g or less. The lower limit of the acid value of the polyol composition of the present embodiment is not particularly limited and is, for example, 0.05 mgKOH/g.

Examples of the method for controlling the acid value of the polyol composition within the range described above include, but are not particularly limited to, a method of adding an acidic compound or a basic compound to the polyol composition.

In the present embodiment, the acid value of the polyol composition is evaluated by a method described in Examples mentioned later.

The polyol composition of the present embodiment preferably comprises polycarbonate diol. Examples of the method for obtaining the polyol composition having an ether skeleton and/or an ester skeleton include, but are not limited to, a method of mixing polycarbonate diol with an ether compound and/or an ester compound, a method of adding an ether compound and/or an ester compound to polycarbonate diol, and heating and stirring the mixture at 130 to 180°C for reaction, and a method of using an ether compound and/or an ester compound as a starting material in polymerization to obtain polycarbonate diol.

A method for producing the polycarbonate diol for use in the polyol composition of the present embodiment is not particularly limited, and the polycarbonate diol can be produced by, for example, various methods described in Schnell, Polymer Reviews, Vol. 9, p. 9-20 (1994) and can be produced, for example, with diol and carbonate as starting materials.

Examples of the diol include, but are not particularly limited to: diol having no side chain, such as ethylene glycol, 1,3-propanediol, 1,4-butanediol, 1,5-pentanediol, 1,6-hexanediol, 1,7-heptanediol, 1,8-octanediol, 1,9-nonanediol, 1,10-dodecanediol, 1,11-undecanediol, 1,12-dodecanediol, 1,13-tridecanediol, 1,14-tetradecanediol, and 1,15-pentadecanediol; diol having a side chain, such as 2-methyl-1,8-octanediol, 2-ethyl-1,6-hexanediol, 2-methyl-1,3-propanediol, 3-methyl-1,5-pentanediol, 2,4-dimethyl-1,5-pentanediol, 2,4-diethyl-1,5-pentanediol, 2-butyl-2-ethyl-1,3-propanediol, and 2,2-dimethyl-1,3-propanediol; and cyclic diol such as 1,4-cyclohexanedimethanol and 2-bis(4-hydroxycyclohexyl)-propane. One of these diols can be used alone, or two or more thereof can be used in combination. Among them, one or more diols having no side chain are preferably used as starting materials because chemical resistance and mechanical strength are further improved. Two or more types (preferably two types) of diols selected from the group consisting of 1,3-propanediol, 1,4-butanediol, 1,5-pentanediol and 1,6-hexanediol are preferably used as starting materials for the polycarbonate diol.

In the case of using two or more types of diols as starting materials in the production of the polycarbonate diol for use in the present embodiment, the ratio between these starting materials is not particularly limited. For the resulting polyol composition having fluidity at room temperature, it is preferred to set the ratio between the starting materials. More specifically, in the case of using two diols as starting materials, it is preferred to set the amounts of the starting materials added such that their molar ratio is 20/80 to 80/20. When the molar ratio falls within the range described above, the resulting polycarbonate diol tends to be in a liquid state at 20°C. The molar ratio is more preferably 30/70 to 70/30, further preferably 40/60 to 60/40.

Examples of the carbonate include, but are not particularly limited to: dialkyl carbonate such as dimethyl carbonate, diethyl carbonate, dipropyl carbonate, and dibutyl carbonate; diaryl carbonate such as diphenyl carbonate; and alkylene carbonate such as ethylene carbonate, trimethylene carbonate, 1,2-propylene carbonate, 1,2-butylene carbonate, 1,3-butylene carbonate, and 1,2-pentylene carbonate. One of these carbonates can be used alone, or two or more thereof can be used in combination. Among them, at least one member selected from the group consisting of dimethyl carbonate, diethyl carbonate, diphenyl carbonate, dibutyl carbonate, and ethylene carbonate is preferably used from the viewpoint of easy availability and easy setting of conditions for polymerization reaction.

In the production of the polycarbonate diol for use in the present embodiment, a catalyst is preferably added. Examples of the catalyst include, but are not particularly limited to, catalysts usually used in transesterification reaction (transesterification reaction catalysts). Examples of the transesterification reaction catalyst include, but are not particularly limited to, metal compounds of alkali metals and alkaline earth metals (e.g., organic metal compounds such as metal alcoholate (metal alkoxide), metal oxide, and metal amide; inorganic metal compounds such as metal hydride and metal hydroxide; and metal salts such as metal carbonate, nitrogen-containing metal borate, and basic alkali metal salts and alkaline earth metal salts of organic acids). Examples of the alkali metal include, but are not particularly limited to, lithium, sodium, and potassium. Examples of the alkaline earth metal include, but are not particularly limited to, magnesium, calcium, strontium, and barium. Examples of other metals include, but are not particularly limited to, aluminum, titanium,

vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth, and ytterbium. One of these catalysts can be used alone, or two or more thereof can be used in combination. Among them, an organic compound (particularly, metal alkoxide) and/or a salt of at least one metal selected from the group consisting of sodium, potassium, magnesium, potassium, titanium, zirconium, tin, lead, and ytterbium is preferably used because polymerization reaction for the polycarbonate diol is favorably performed and the catalyst is less likely to influence the production of a resin such as polyurethane resin using the resulting polycarbonate diol. Particularly, an organic compound (particularly, metal alkoxide) and/or a salt of at least one metal selected from the group consisting of titanium, tin, zirconium, magnesium and ytterbium is more preferably used as the catalyst.

Specific examples of the method for producing the polycarbonate diol for use in the present embodiment will be described below. The production of the polycarbonate diol for use in the present embodiment is not particularly limited and can be performed, for example, at two stages. The diol and the carbonate are mixed at a molar ratio (diol:carbonate) of, for example, 20:1 to 1:10, and reaction of the first stage is performed at 100 to 250°C under ordinary pressure or reduced pressure. In the case of using dimethyl carbonate as the carbonate, formed methanol can be removed as a mixture with dimethyl carbonate to obtain low-molecular-weight polycarbonate diol. In the case of using diethyl carbonate as the carbonate, formed ethanol can be removed as a mixture with diethyl carbonate to obtain low-molecular-weight polycarbonate diol. In the case of using ethylene carbonate as the carbonate, formed ethylene glycol can be removed as a mixture with ethylene carbonate to obtain low-molecular-weight polycarbonate diol. Subsequently, reaction of the second stage is reaction to obtain polycarbonate diol having a predetermined molecular weight by condensing low-molecular-weight polycarbonate diol while heating the reaction production of the first stage at 160 to 250°C under reduced pressure for the removal of unreacted diol and carbonate.

Examples of the ether compound for use in the polyol composition of the present embodiment include, but are not particularly limited to, polyether polyols obtainable by adding one or two or more alkylene oxides such as ethylene oxide or propylene oxide to one or two or more polyvalent hydroxy compounds (e.g., ethylene glycol, propylene glycol, trimethylolpropane, glycerin, and pentaerythritol), ring-opened polymers of tetrahydrofuran, and ether having two or more OH groups, such as diethylene glycol and triethylene glycol.

Examples of the ester compound for use in the polyol composition of the present embodiment include, but are not particularly limited to, polyester polyols obtainable through the direct esterification reaction and/or transesterification reaction of a polyhydric alcohol with polyvalent carboxylic acid or an ester-forming derivative (e.g., ester, anhydride, and halide) thereof. Examples of the polyhydric alcohol include, but are not particularly limited to: aliphatic diols such as ethylene glycol, 1,2-propanediol, 1,3-propanediol, 2-methyl-1,3-propanediol, 2-butyl-2-ethyl-1,3-propanediol, 1,4-butanediol, neopentyl glycol, 3-methyl-2,4-pentanediol, 2,4-pentanediol, 1,5-pentanediol, 3-methyl-1,5-pentanediol, 2-methyl-2,4-pentanediol, 2,4-diethyl-1,5-pentanediol, 1,6-hexanediol, 1,7-heptanediol, 3,5-heptanediol, 1,8-octanediol, 2-methyl-1,8-octanediol, 1,9-nonanediol, 1,10-decanediol, diethylene glycol, and triethylene glycol; alicyclic diols such as cyclohexanedimethanol and cyclohexanediol; and trihydric or higher alcohols such as trimethylolethane, trimethylolpropane, hexitols, pentitols, glycerin, pentaerythritol, and tetramethylolpropane. Examples of the polyvalent carboxylic acid or the ester-forming derivative thereof include, but are not particularly limited to: aliphatic dicarboxylic acids such as oxalic acid, malonic acid, succinic acid, glutaric acid, adipic acid, pimelic acid, suberic acid, azelaic acid, sebacic acid, dodecanedioic acid, 2-methylsuccinic acid, 2-methyladipic acid, 3-methyladipic acid, 3-methylpentanedioic acid, 2-methyloctanedioic acid, 3,8-dimethyldecanedioic acid, 3,7-dimethyldecanedioic acid, hydrogenated dimer acid, and dimer acid; aromatic dicarboxylic acids such as phthalic acid, terephthalic acid, isophthalic acid, and naphthalenedicarboxylic acid; alicyclic dicarboxylic acids such as 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 1,4-dicarboxylmethylenecyclohexane, nadic acid, and methylnadic acid; polyvalent carboxylic acids including tricarboxylic acids such as trimellitic acid, trimesic acid, and trimers of castor oil fatty acids; and acid anhydrides of these polyvalent carboxylic acids, halides (e.g., chloride and bromide) of the polyvalent carboxylic acids, and methyl ester, ethyl ester, propyl ester, isopropyl ester, butyl ester, and isobutyl ester of the polyvalent carboxylic acids. Further examples thereof include ring-opened polymers of caprolactone, such as polycaprolactone diol.

[Urethane prepolymer]

The urethane prepolymer of the present embodiment is a urethane prepolymer for synthetic leather production without a solvent and is obtainable using the polyol composition mentioned above and a polyisocyanate.

The urethane prepolymer can be obtained using the polyol composition, a polyisocyanate, and optionally a chain extender in combination. Further, additives such as a urethanization catalyst, a silane coupling agent, a thixotropy-imparting agent, an antioxidant, a plasticizer, a filler, and a wax may be used singly or in combination of two or more thereof, if necessary.

Examples of the polyisocyanate that can be used include, but are not particularly limited to: aromatic polyisocyanates such as phenylene diisocyanate, tolylene diisocyanate, diphenylmethane diisocyanate, naphthalene diisocyanate, polymethylene polyphenyl polyisocyanate, and carbodiimide-modified diphenylmethane polyisocyanate; and aliphatic or alicyclic polyisocyanates such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate. These polyisocyanates may each be used singly or may be used in combination of two or more thereof.

Examples of the chain extender that can be used include, but are not particularly limited to: chain extenders having an amino group, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, and hydrazine; and chain extenders having a hydroxy group, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerin, sorbitol, bisphenol A, 4,4'-dihydroxydiphenyl, 4,4'-dihydroxydiphenyl ether, and trimethylolpropane. These chain extenders may each be used singly or may be used in combination of two or more thereof.

Specifically, the urethane prepolymer of the present embodiment can be produced, for example, by using the polyol composition mentioned above, the polyisocyanate, and optionally the chain extender, and reacting them under conditions where the isocyanate groups of the polyisocyanate are an excess with respect to the hydroxy groups of the polyol composition, etc.

[Method for producing synthetic leather]

The method for producing synthetic leather according to the present embodiment may be a method comprising the step of applying a urethane prepolymer composition comprising the urethane prepolymer mentioned above onto a base fabric or a release support without a solvent, followed by moisture curing, or may be a method comprising the step of applying a mixed solution obtained by mixing a urethane prepolymer composition comprising the urethane prepolymer mentioned above with a cross-linking agent onto a base fabric or a release support without a solvent, followed by reaction.

Examples of the method for producing synthetic leather according to the present embodiment specifically include, but are not particularly limited to, a method of preparing the urethane prepolymer mentioned above having an isocyanate group, followed by moisture curing, and a curing method of mixing the urethane prepolymer mentioned above with a cross-linking agent having a hydroxy group and/or an amino group.

Examples thereof more specifically include a method of applying the urethane prepolymer mentioned above onto a release support, and subsequently laminating the coated surface onto a base material (base fabric), followed by curing to form a cured layer on the base material (base fabric), and a method of applying the urethane prepolymer mentioned above directly onto a base material (base fabric), followed by curing to form a cured layer on the base material (base fabric).

Examples of the base material (base fabric) that can be used include nonwoven fabrics, woven fabrics, and knits made of polyester fiber, polyethylene fiber, nylon fiber, acrylic fiber, polyurethane fiber, acetate fiber, rayon fiber, polylactic acid fiber, cotton, linen, silk, wool, glass fiber, carbon fiber, or mixed fiber thereof, the nonwoven fabrics impregnated with a resin such as polyurethane resin, the nonwoven fabrics further provided with a porous layer, and resin base materials such as thermoplastic urethane (TPU).

Examples of the method for applying the urethane prepolymer include, but are not particularly limited to, methods using applicators, roll coaters, spray coaters, T-die coaters, knife coaters, or comma coaters.

Examples of the cross-linking agent include: cross-linking agents having a hydroxy group, such as polyether polyol, polycarbonate polyol, polyester polyol, polyacrylic polyol, dimer diol, ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerin, sorbitol, bisphenol A, 4,4'-dihydroxydiphenyl, 4,4'-dihydroxydiphenyl ether, and trimethylolpropane; and cross-linking agents having an amino group, such as ethylenediamine, tetramethylenediamine, hexamethylenediamine, diethylenetriamine, triethylenetetramine, hydrazine, piperazine, diaminodiphenylmethane, tolylenediamine, xylylenediamine, isophoronediamine, and norbornanediamine.

In the present embodiment, the phrase "without a solvent" includes to produce a urethane prepolymer without the use of a solvent and produce synthetic leather without the addition of a solvent thereto as well as to not use DMF conventionally used and decrease the amount of another solvent used to less than half the conventional amount thereof and further to 1/3 or less of the conventional amount thereof. In the present embodiment, artificial leather is encompassed in the scope of the synthetic leather.

Examples

Hereinafter, the present embodiment will be described in more detail with reference to specific Examples and

Comparative Examples. However, the present embodiment is not limited by the following Examples and Comparative Examples by any means without departing from the spirit of the present embodiment.

Various physical properties in Examples and Comparative Examples mentioned later were measured by methods described below.

1. Viscosity of polyol composition

The viscosity of each polyol composition was determined by the method using a cone-plate rotational viscometer described in JIS K 1557-5 (2007) except that a measurement temperature was set to 50°C.

2. Determination of hydroxyl value of polyol composition

The hydroxyl value of each polyol composition was determined by the method A described in JIS K 1557-1 (2007) .

3. Determination of acid value of polyol composition

The acid value of each polyol composition was determined by the potentiometric titration described in JIS K 0070 (1992).

4. Determination of carbonate skeleton value of polyol composition

The $^1$H-NMR integral value ratio of each polyol composition was determined as follows, and the carbonate skeleton value of the polyol composition was determined.

First, 10 mg of a sample was dissolved in 0.75 mL of deuterated chloroform (manufactured by Sigma-Aldrich Co. LLC). Tetramethylsilane (TMS) was added as a chemical shift reference to the solution, and the $^1$H-NMR of the obtained solution was measured using ECZ500 (SC) manufactured by JEOL Ltd. In the measurement, $^1$H-NMR spectra were obtained under conditions of resonant frequency: 500 MHz, pulse width: 45°, waiting time: 5 seconds, the number of scans: 5000, and TMS signal: 0 ppm. The carbonate skeleton value of the polyol composition was determined according to the following expression (1) using the integral values of signals of methylene and/or methine bonded to oxygen in carbonate bonds, signals of methylene and/or methine bonded to oxygen in ether bonds, and signals of methylene and/or methine bonded to carbonyl carbon in ester bonds in the measured $^1$H-NMR spectra.

$$\text{Carbonate skeleton value (\% by mol)} = (A / 2 + B) / \{(A / 2 + B) / 2 + (C / 2 + D) / 2 + (E / 2 + F)\} \times 100 \quad \ldots (1)$$

A: integral value of methylene bonded to oxygen in carbonate bonds
B: integral value of methine bonded to oxygen in carbonate bonds
C: integral value of methylene bonded to oxygen in ether bonds
D: integral value of methine bonded to oxygen in ether bonds
E: integral value of methylene bonded to carbonyl carbon in ester bonds
F: integral value of methine bonded to carbonyl carbon in ester bonds

5. Determination of fluidity of polyol composition

A flat-bottom cylindrical clear glass test tube of 30 mm in inside diameter and 120 mm in height having marked lines at heights of 55 mm (line A) and 85 mm (line B) from the tube bottom was used. A sample (polyol composition) heated for 8 hours in a dryer of 50°C was weighed to the line A and then left standing in an upright position at room temperature of 20 ± 5°C for 24 hours. Immediately thereafter, the tube was laid down horizontally on a table. The time required for the end of the liquid level of the sample to pass through the line B after the test sample was laid down was regarded as a flow time (sec) and used as an index for the fluidity of the polyol composition. A sample having a flow time of 90 seconds or shorter was evaluated as having fluidity. In the measurement, whether the polyol composition was transparent or cloudy was also confirmed.

6. Determination of glass transition temperature (Tg) of polyol composition

Approximately 10 g of each polyol composition was placed in an aluminum pan. Temperature increase and decrease operations were performed from 30°C to 100°C at a rate of 20°C/min, from 100°C to -100°C at a rate of 5°C/min, and from -100°C to 100°C at a rate of 5°C/min in a nitrogen atmosphere using a differential scanning calorimeter (DSC7000X, manufactured by Hitachi High-Tech Science Corp.). An inflection point at the time of the second temperature increase was regarded as the glass transition temperature (Tg) of the polyol composition.

7. Determination of difference in glass transition temperature (Tg) between polyurethane and polyol composition (ΔTg)

A polyurethane film was produced by a method mentioned later using each polyol composition whose Tg was determined in the preceding section 6. The obtained polyurethane film was cut into a test specimen having a width of 10 mm, a length of 40 mm, and a thickness of 0.4 mm. The test specimen was loaded at a chuck interval of 20 mm using a viscoelastic measurement apparatus (manufactured by Hitachi High-Tech Science Corp., [TA7000 series, DMA7100]). While the temperature was increased from -100°C to 100°C at 5°C/min, viscoelasticity was measured. The peak of tanδ was read from the measurement results, and the glass transition temperature (Tg) of polyurethane was determined. ΔTg was determined according to the following expression (2) using the Tg of the polyol composition determined in the section 6 and the Tg of the polyurethane produced using the polyol composition.

$$\Delta Tg\ (^{\circ}C) = (\text{Tg of the polyurethane}) - (\text{Tg of the polyol composition}) \quad \ldots (2)$$

8. Evaluation of flexibility

A reed-shaped test specimen having a width of 10 mm, a length of 100 mm, and a thickness of approximately 0.1 mm was prepared from a polyurethane film produced by a method mentioned later. The prepared test specimen was subjected to a tensile test under conditions involving a chuck interval of 20 mm, a pulling rate of 100 mm/min, and a temperature of 23°C (relative humidity: 55%) using a tensile tester (manufactured by Orientec Co., Ltd., product name "TENSILON, model RTE-1210"). Stress at 100% elongation (100% modulus) of the test specimen was measured. A sample having a lower 100% modulus was evaluated as having better flexibility.

9. Evaluation of moist heat resistance

A reed-shaped sample having a width of 10 mm, a length of 100 mm, and a thickness of approximately 100 μm was prepared from a polyurethane film. The prepared sample was heated for 10 days under conditions involving a temperature of 85°C and a humidity of 85% using a thermo-hygrostat manufactured by ESPEC Corp. under a product name of "PL-1J". The sample was subjected before and after the heating to a tensile test under conditions involving a chuck interval of 20 mm, a pulling rate of 100 mm/min, and a temperature of 23°C (relative humidity: 55%) using a tensile tester (manufactured by Orientec Co., Ltd., product name "TENSILON, model RTE-1210"). Stress at break of the test specimen was measured, and the rate of strength retention was determined according to the expression (3) given below, and used as an index for the moist heat resistance of polyurethane. A sample having a higher rate of strength retention was evaluated as having better moist heat resistance.

$$\text{Rate of strength retention (\%)} = \text{Breaking strength after heating} / \text{Breaking strength before heating} \times 100 \quad \ldots (3)$$

10. Chemical resistance test (oleic acid resistance test)

Oleic acid resistance was evaluated as chemical resistance.

A polyurethane film was cut into a 1 cm × 10 cm test specimen. The mass of the test specimen was measured with a precision balance, then added to a 250 mL glass tray containing 50 mL of oleic acid as a test solvent, and left standing for 24 hours in a thermostat of 80°C in a nitrogen atmosphere. The test specimen thus tested was taken out thereof, and the front and back sides were lightly wiped with a paper wiper. Then, the mass was measured with a precision balance, and the rate of change in mass from the mass before the test (rate of increase (rate of swelling (%))

was calculated. A rate of change in mass closer to 0% indicates better oleic acid resistance.

[Polymerization Example 1]

A 2 L glass flask equipped with a rectifying column packed with a regular packing material, and a stirring apparatus was charged with 680 g (7.6 mol) of dimethyl carbonate, 420 g (4.0 mol) of 1,5-pentanediol, and 480 g (4.1 mol) of 1,6-hexanediol. To the flask, 0.14 g of titanium tetraisopropoxide was further added as a catalyst. The mixture in the flask was stirred and heated at ordinary pressure to start reaction. While the temperature was elevated to 90 to 140°C, a formed mixture of methanol and dimethyl carbonate was distilled off and reaction was performed for 20 hours. Then, the pressure was reduced to 17 kPa. While a mixture of methanol and dimethyl carbonate was distilled off, reaction was performed at 150°C for additional 15 hours to obtain polycarbonate diol (hereinafter, also referred to as "PC-1").

[Polymerization Example 2]

Polymerization was performed using the apparatus described in Polymerization Example 1. The apparatus was charged with 580 g (6.6 mol) of ethylene carbonate, 300 g (3.3 mol) of 1,4-butanediol, and 390 g (3.3 mol) of 1,6-hexanediol. 0.11 g of titanium tetrabutoxide was added thereto as a catalyst, and the mixture was stirred and heated at ordinary pressure. While a formed mixture of ethylene glycol and ethylene carbonate was distilled off by gradually elevating the reaction temperature to 160°C, reaction was performed for 20 hours. Then, the pressure was reduced to 15 kPa. While diol and ethylene carbonate were distilled off, reaction was performed at 160°C for additional 6 hours to obtain polycarbonate diol (hereinafter, also referred to as "PC-2").

[Polymerization Example 3]

Polymerization was performed using the apparatus described in Polymerization Example 1. The apparatus was charged with 820 g (7.0 mol) of diethyl carbonate and 860 g (7.3 mol) of 1,6-hexanediol. 0.14 g of titanium tetrabutoxide was added thereto as a catalyst, and the mixture was stirred at ordinary pressure. While the temperature was elevated to 90 to 160°C, a formed mixture of ethanol and diethyl carbonate was distilled off and reaction was performed for 20 hours. Then, the pressure was reduced to 17 kPa. While a mixture of ethanol and diethyl carbonate was distilled off, reaction was performed at 160°C for additional 12 hours to obtain polycarbonate diol (hereinafter, also referred to as "PC-3") .

[Comparative Example 1]

A 1 L glass flask (hereinafter, also referred to as a "reactor") equipped with a stirring apparatus was charged with 420 g of the polycarbonate diol P-1 obtained in Polymerization Example 1, and 180 g of polyoxypropylene glycol E-1 (manufactured by Sanyo Chemical Industries, Ltd., "NEWPOL PE-61" (trade name), number-average molecular weight: approximately 2000). Subsequently, these were heated with stirring, and the internal temperature of the reactor was kept at approximately 145°C for 15 hours. Subsequently, 2-ethylhexyl acid phosphate was added at a molar ratio of 2.5 times the amount of titanium tetraisopropoxide, and the mixture was heat-treated at 120°C (internal temperature of the reactor) for 5 hours to obtain polyol composition A-21. The progression, etc. of transesterification reaction was confirmed by measuring the reaction solution over time by gel permeation chromatography (hereinafter, also abbreviated to "GPC") and confirming the disappearance of peaks derived from the starting materials and the appearance of a peak derived from the product over time. Then, it was also confirmed as to the finally obtained polyol composition by GPC measurement over time that the reaction progressed almost quantitatively on the basis of the amounts of the starting materials added and the polyol composition had a structure corresponding thereto. The physical properties of the obtained polyol composition A-21 were measured by the methods described above. The results are shown in Table 1.

[Example 1]

Polyol composition A-1 was obtained through reaction by the method of Comparative Example 1 except that the reactor was charged with 300 g of the polycarbonate diol P-1 obtained in Polymerization Example 1, and 300 g of polyoxypropylene glycol E-1 (manufactured by Sanyo Chemical Industries, Ltd., "NEWPOL PE-61" (trade name), number-average molecular weight: approximately 2000). The physical properties of the obtained polyol composition A-1 were measured by the methods described above. The results are shown in Table 1.

[Example 2]

Polyol composition A-2 was obtained through reaction by the method of Comparative Example 1 except that the reactor was charged with 150 g of the polycarbonate diol P-1 obtained in Polymerization Example 1, and 450 g of polyoxypropylene glycol E-1 (manufactured by Sanyo Chemical Industries, Ltd., "NEWPOL PE-61" (trade name), number-average molecular weight: approximately 2000). The physical properties of the obtained polyol composition A-2 were measured by the methods described above. The results are shown in Table 1.

[Example 3]

Polyol composition A-3 was obtained through reaction by the method of Comparative Example 1 except that the reactor was charged with 18 g of the polycarbonate diol P-1 obtained in Polymerization Example 1, and 582 g of polyoxypropylene glycol E-1 (manufactured by Sanyo Chemical Industries, Ltd., "NEWPOL PE-61" (trade name), number-average molecular weight: approximately 2000). The physical properties of the obtained polyol composition A-3 were measured by the methods described above. The results are shown in Table 1.

[Comparative Example 2]

Polyol composition A-22 was obtained through reaction by the method of Example 1 except that the reactor was charged with 6 g of the polycarbonate diol P-1 obtained in Polymerization Example 1, and 594 g of polyoxypropylene glycol E-1 (manufactured by Sanyo Chemical Industries, Ltd., "NEWPOL PE-61" (trade name), number-average molecular weight: approximately 2000). The physical properties of the obtained polyol composition A-22 were measured by the methods described above. The results are shown in Table 1.

[Example 4]

The apparatus used in Example 1 was used and charged with 270 g of the polycarbonate diol P-2 obtained in Polymerization Example 2, and 330 g of polyoxypropylene glycol E-1 (manufactured by Sanyo Chemical Industries, Ltd., "NEWPOL PE-61" (trade name), number-average molecular weight: approximately 2000). Subsequently, these were heated with stirring, and the internal temperature of the reactor was kept at approximately 145°C for 15 hours. Subsequently, n-butyl acid phosphate was added at a molar ratio of 2.5 times the amount of titanium tetraisopropoxide, and the mixture was heat-treated at 120°C (internal temperature of the reactor) for 5 hours to obtain polyol composition A-4. The physical properties of the obtained polyol composition A-4 were measured by the methods described above. The results are shown in Table 1.

[Example 5]

The apparatus used in Example 1 was used and charged with 270 g of the polycarbonate diol P-2 obtained in Polymerization Example 2, and 330 g of polyoxypropylene glycol E-1 (manufactured by Sanyo Chemical Industries, Ltd., "NEWPOL PE-61" (trade name), number-average molecular weight: approximately 2000). Subsequently, these were heated with stirring, and the internal temperature of the reactor was kept at approximately 80°C for 30 minutes. Subsequently, n-butyl acid phosphate was added at a molar ratio of 2.5 times the amount of titanium tetraisopropoxide, and the mixture was heat-treated at 120°C (internal temperature of the reactor) for 5 hours to obtain polyol composition A-5. The physical properties of the obtained polyol composition A-5 were measured by the methods described above. The results are shown in Table 1.

[Example 6]

The apparatus used in Example 1 was used and charged with 120 g of the polycarbonate diol P-2 obtained in Polymerization Example 2, and 480 g of polyoxytetramethylene glycol E-2 (manufactured by Mitsubishi Chemical Corp., "PTMG2000" (trade name), number-average molecular weight: approximately 2000). Subsequently, these were heated with stirring, and the internal temperature of the reactor was kept at approximately 145°C for 15 hours. Subsequently, n-butyl acid phosphate was added at a molar ratio of 2.5 times the amount of titanium tetraisopropoxide, and the mixture was heat-treated at 120°C (internal temperature of the reactor) for 5 hours to obtain polyol composition A-6. The physical properties of the obtained polyol composition A-6 were measured by the methods described above. The results are shown in Table 1.

[Example 7]

The apparatus used in Example 1 was used and charged with 90 g of the polycarbonate diol P-3 obtained in Polymerization Example 3, and 510 g of polycaprolactone diol E-3 (manufactured by Daicel Corp., "PLACCEL 220" (trade name), number-average molecular weight: approximately 2000). Subsequently, these were heated with stirring, and the internal temperature of the reactor was kept at approximately 80°C for 30 minutes. Subsequently, 2-ethylhexyl acid phosphate was added at a molar ratio of 2.5 times the amount of titanium tetraisopropoxide, and the mixture was heat-treated at 120°C (internal temperature of the reactor) for 5 hours to obtain polyol composition A-7. The physical properties of the obtained polyol composition A-7 were measured by the methods described above. The results are shown in Table 1.

[Table 1]

| | Carbonate skeleton % by mol | Viscosity mPa·s | Hydroxyl value mgKOH/g | Glass transition temperature °C | Fluidity | Acid value mgKOH/g | Polyol composition |
|---|---|---|---|---|---|---|---|
| Example 1 | 29.1 | 1210 | 56.2 | -63.5 | Present Transparent | - | A-1 |
| Example 2 | 12.0 | 340 | 56.1 | -67.6 | Present Transparent | - | A-2 |
| Example 3 | 1.3 | 120 | 56.0 | -70.1 | Present Transparent | - | A-3 |
| Example 4 | 26.2 | 1120 | 56.2 | -60.9 | Present Transparent | 0.93 | A-4 |
| Example 5 | 26.2 | 1190 | 56.2 | - | Present Cloudy | - | A-5 |
| Example 6 | 12.1 | 910 | 56.4 | -71.3 | Present Cloudy | - | A-6 |
| Example 7 | 13.4 | 1080 | 56.6 | -58.2 | Present Cloudy | 2.31 | A-7 |
| Comparative Example 1 | 48.9 | 3320 | 56.3 | -61.2 | Present Transparent | 0.81 | A-21 |
| Comparative Example 2 | 0.4 | 98 | 56.0 | -70.6 | Present Transparent | - | A-22 |

Abbreviations in the table and the specification are as follows.

E-1: polyoxypropylene glycol (manufactured by Sanyo Chemical Industries, Ltd., "NEWPOL PE-61" (trade), number-average molecular weight: approximately 2000)

E-2: polyoxytetramethylene glycol (manufactured by Mitsubishi Chemical Corp., "PTMG2000" (trade name), number-average molecular weight: approximately 2000)

E-3: polycaprolactone diol E-3 (manufactured by Daicel Corp., "PLACCEL 220" (trade name), number-average molecular weight: approximately 2000)

[Production of polyurethane]

A polyurethane film was produced as follows using the polyol composition obtained in each of Examples and Comparative Examples. In a 500 mL separable flask in which a thermocouple and a condenser tube were installed, 38 g of the polyol composition, 224 g of dimethylformamide (hereinafter, also abbreviated to DMF), and 0.26 g (50 ppm based on the total mass of MDI and polycarbonate diol composition) of a 1% solution of dibutyltin dilaurate in toluene were placed and heated in an oil bath of 40°C. While the solution in the flask was stirred at 100 rpm in an internal nitrogen atmosphere of the flask, 14.8 g (3.09 times [mol] with respect to OH [mol] of the polycarbonate diol composition) of MDI was added dropwise thereto, and the solution in the flask was stirred for approximately 1.5 hours. The consumption of a theoretical amount was confirmed by the analysis of isocyanate groups to obtain a prepolymer. Subsequently, 3.2 g of 1,4-butanediol (1,4-BD) which was a necessary amount calculated from residual isocyanate was added in divided portions into the flask. The solution in the flask was stirred for approximately 1 hour. Then, approximately 1 g of ethanol was added thereto, and the solution in the flask was stirred for another 30 minutes to obtain a polyurethane solution.

The obtained polyurethane solution was added dropwise onto the upper part of a glass plate (JIS R 3202, 2 mm × 100 mm × 150 mm), and the surface was coated using a 0.8 mm thick applicator such that a dry film thickness was 50 to 150 μm, followed by drying on a hot plate having a surface temperature of 60°C for 2 hours and subsequently in an oven of 80°C for 12 hours. The glass plate was further left standing at a constant temperature and humidity of 23°C and 55% RH for 12 hours or longer to obtain a polyurethane film. The physical properties of the obtained polyurethane film were evaluated by the methods described above. The evaluation results are shown in Table 2.

[Table 2]

| | Polyol composition | ΔTg °C | Moist heat resistance Rate of strength retention % | Chemical resistance Rate of swelling % | 100% modulus MPa/23°C |
|---|---|---|---|---|---|
| Example 1 | A-1 | 43.6 | 49.8 | 38.2 | 2.2 |
| Example 2 | A-2 | 43.0 | 45.7 | 42.7 | 2.1 |
| Example 3 | A-3 | 41.2 | 41.1 | 102.8 | 2.1 |
| Example 4 | A-4 | 44 | 47.3 | 28.7 | 2.3 |
| Example 5 | A-5 | - | 48.8 | 29.8 | 2.5 |
| Example 6 | A-6 | 43.1 | 50.3 | 45.2 | 3.1 |
| Example 7 | A-7 | 41.7 | 44.6 | 18.2 | 2.8 |
| Comparative Example 1 | A-21 | 45.3 | 55.3 | 19.4 | 2.6 |
| Comparative Example 2 | A-22 | 41.1 | 39.3 | 104.1 | 2.0 |

[Application Example 1 (urethane prepolymer)]

A 500 mL separable flask in which a thermocouple and a condenser tube were installed was charged with 300 g of the polyol composition A-1, which was then dehydrated under reduced pressure at 50°C until the water content became 0.05% by mass or less. Subsequently, 75 g of MDI was added thereto, and the mixture was heated to 80°C and reacted for approximately 2 hours until the isocyanate group content became constant to obtain urethane prepolymer PP-1-1.

[Application Examples 2 to 7 (urethane prepolymer)]

Urethane prepolymers PP-1-2 to PP-1-7 were obtained by the method of Application Example 1 except that the polyol compositions A-2 to A-7 were used instead of the polyol composition A-1.

[Comparative Application Examples 1 and 2 (urethane prepolymer)]

Urethane prepolymers PP-1-21 and PP-1-22 were obtained by the method of Application Example 1 except that the polyol compositions A-21 and A-22 were used instead of the polyol composition A-1.

[Application Example 8 (urethane prepolymer)]

A 500 mL separable flask in which a thermocouple and a condenser tube were installed was charged with 300 g of the polyol composition A-1, which was then dehydrated under reduced pressure at 50°C until the water content became 0.05% by mass or less. Subsequently, 55 g of MDI was added thereto, and the mixture was heated to 80°C and reacted for approximately 2 hours until the isocyanate group content became constant to obtain urethane prepolymer PP-2-1.

[Application Examples 51 to 57 (synthetic leather)]

100 parts by mass each of the urethane prepolymers PP-1-1 to PP-1-7 were mixed with 3.6 parts by mass of 1,4-butanediol, and the mixture was applied onto a release paper using a knife coater such that a dry thickness was 30 μm, followed by drying at 100°C for 2 minutes. Then, polyester tricot was laminated thereon as a base fabric. The resultant was dried at 50°C for 48 hours, and the release paper was removed to obtain synthetic leather.

[Comparative Application Examples 11 and 12 (synthetic leather)]

100 parts by mass each of the urethane prepolymers PP-1-21 and PP-1-22 were mixed with 3.6 parts by mass of 1,4-butanediol, and the mixture was applied onto a release paper using a knife coater such that a dry thickness was 30 μm, followed by drying at 100°C for 2 minutes. Then, polyester tricot was laminated thereon as a base fabric. The resultant was dried at 50°C for 48 hours, and the release paper was removed to obtain synthetic leather.

[Application Example 61 (synthetic leather)]

The urethane prepolymer PP-2-1 was heated at 110°C, applied in an amount of 0.2 kg/$m^2$ onto a release paper loaded in a roll coater, and then laminated with a nonwoven fabric impregnated with urethane resin in a tucked state. The resultant was left at a temperature of 25°C in an atmosphere having a humidity of 50% RH for 3 days to obtain synthetic leather.

Industrial Applicability

The polyol composition of the present invention has low viscosity and as such, can be used in a polyurethane resin composition for use in synthetic leather or artificial leather without the use of a solvent. Use of the polyol composition of the present invention tends to be able to produce synthetic leather or artificial leather excellent in chemical resistance or moist heat resistance. Hence, the polyol composition of the present invention can be suitably used in a polyurethane resin composition for use in solventless synthetic leather or artificial leather.

## Claims

1. A polyol composition for a starting material for synthetic leather production without a solvent, the polyol composition having a carbonate skeleton, having a viscosity of 100 to 1250 mPa·s measured at 50°C by a method of JIS K 1557-5 (2007), and
having a hydroxyl value of 40 to 75 mgKOH/g measured by a method of JIS K 1557-1 (2007).

2. The polyol composition according to claim 1, wherein the polyol composition has an ester skeleton and/or an ether skeleton, and has a content of the carbonate skeleton is 1 to 99% by mol.

3. The polyol composition according to claim 1, wherein the polyol composition has an ester skeleton and/or an ether skeleton, and has a content of the carbonate skeleton is 1 to 30% by mol.

4. The polyol composition according to any one of claims 1 to 3, wherein the polyol composition has a glass transition temperature of -60°C or lower measured with a differential scanning calorimeter, and has an acid value of 2.5 mgKOH/g or less determined by a method described in JIS K 0070 (1992).

5. A urethane prepolymer for synthetic leather production without a solvent, the urethane prepolymer being obtainable using the polyol composition according to any one of claims 1 to 4 and a polyisocyanate.

6. A method for producing synthetic leather, comprising the step of applying a urethane prepolymer composition comprising the urethane prepolymer according to claim 5 onto a base fabric or a release support without a solvent, followed by moisture curing.

7. A method for producing synthetic leather, comprising the step of applying a mixed solution obtained by mixing a urethane prepolymer composition comprising the urethane prepolymer according to claim 5 with a cross-linking agent onto a base fabric or a release support without a solvent, followed by reaction.

European Patent Office

# EUROPEAN SEARCH REPORT

Application Number
EP 22 16 8983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2021/075503 A1 (ASAHI CHEMICAL IND [JP]) 22 April 2021 (2021-04-22) * comparative examples 3-4; claims 1-10; examples 3-1,4-1; tables 3,6 * | 1-7 | INV. C08G18/12 C08G18/30 C08G18/40 C08G18/44 C08G18/48 C08G18/76 C09D175/06 C09D175/08 D06N3/14 C08G18/32 |
| E | EP 4 026 863 A1 (ASAHI CHEMICAL IND [JP]) 13 July 2022 (2022-07-13) * paragraphs [0001], [0014], [0033], [0036], [0077]; claims 1-11; table 1 * | 1-7 | |
| X | JP 2006 124485 A (ASAHI KASEI CHEMICALS CORP) 18 May 2006 (2006-05-18) * paragraph [0025]; claims 1-10; examples 1-3 * | 1-7 | |
| A,D | WO 2009/098841 A1 (NIPPON POLYURETHANE KOGYO KK [JP]; KAWAGUCHI TADAYUKI [JP] ET AL.) 13 August 2009 (2009-08-13) * claims 1-7 * | 1-7 | |

TECHNICAL FIELDS SEARCHED (IPC)

C08G
C09D
D06N
D06Q

The present search report has been drawn up for all claims

1

| Place of search | Date of completion of the search | Examiner |
|---|---|---|
| Munich | 8 September 2022 | Scheuer, Sylvie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 16 8983

This annex lists the patent family members relating to the patent documents cited in the above-mentioned European search report. The members are as contained in the European Patent Office EDP file on
The European Patent Office is in no way liable for these particulars which are merely given for the purpose of information.

08-09-2022

| Patent document cited in search report | Publication date | Patent family member(s) | Publication date |
|---|---|---|---|
| WO 2021075503 A1 | 22-04-2021 | CN 114555670 A | 27-05-2022 |
| | | EP 4047034 A1 | 24-08-2022 |
| | | JP WO2021075503 A1 | 22-04-2021 |
| | | WO 2021075503 A1 | 22-04-2021 |
| EP 4026863 A1 | 13-07-2022 | CN 114286830 A | 05-04-2022 |
| | | EP 4026863 A1 | 13-07-2022 |
| | | JP WO2021045196 A1 | 11-03-2021 |
| | | WO 2021045196 A1 | 11-03-2021 |
| JP 2006124485 A | 18-05-2006 | JP 4560373 B2 | 13-10-2010 |
| | | JP 2006124485 A | 18-05-2006 |
| WO 2009098841 A1 | 13-08-2009 | CN 101910234 A | 08-12-2010 |
| | | JP 5446026 B2 | 19-03-2014 |
| | | JP 2009185260 A | 20-08-2009 |
| | | KR 20100087203 A | 03-08-2010 |
| | | TW 200946741 A | 16-11-2009 |
| | | WO 2009098841 A1 | 13-08-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009098841 A
- JP 6485726 B
- JP 2019529614 W


### Non-patent literature cited in the description


- **SCHNELL.** *Polymer Reviews,* 1994, vol. 9, 9-20